# EUROPEAN PATENT SPECIFICATION

(11) **EP 3 173 918 B1**
(45) Date of publication and mention of the grant of the patent: **10.01.2024**
(21) Application number: 16166898.3
(22) Date of filing: 25.04.2016
(51) Int. Cl.: G06F 3/0488, G06F 3/0481, G06F 3/04817

(54) **ICON POSITION INTERCHANGING METHOD AND DEVICE**
SYMBOLPOSITIONSAUSTAUSCHVERFAHREN UND -VORRICHTUNG
PROCÉDÉ ET DISPOSITIF D'ÉCHANGE DE POSITION D'ICÔNE

(30) Priority: 05.11.2015 CN 201510745112
(43) Date of publication of application: 31.05.2017
(73) Proprietor: Xiaomi Inc., Beijing 100085 (CN)
(72) Inventor: TAN, Kangxi, 100085 Haidian District Beijing (CN); LIANG, Xin, 100085 Haidian District Beijing (CN); WANG, Xingmin, 100085 Haidian District Beijing (CN)
(74) Representative: Sadler, Peter Frederick

(56) References cited:
- WO-A1-2009/032750
- JP-A- 2013 200 680
- US-A1- 2010 090 971
- US-A1- 2012 084 682
- US-A1- 2013 036 382
- US-A1- 2014 035 853

## Description

### TECHNICAL FIELD

The present disclosure generally relates to the technical field of terminals, and more particularly, to an icon position interchanging method, device, computer program, and terminal.

### BACKGROUND

Along with development of a terminal technology, more and more application programs may be installed on a terminal, and more and more application program icons are thus required to be displayed on a display interface of the terminal. How to enable a user to conveniently manage numerous application program icons becomes an important technical problem in this field.

At present, in order to facilitate management of a user over application program icons, display positions of the icons may be set by the user according to their own requirements on the basis of touch display technology. For example, the user can slide one icon to change this icon's icon position. However, such an icon position interchanging method is not so accurate in recognition of the user's intention, which may easily cause incorrect operation.

The document JP2013200680 discloses that to improve the operability of icon arrangement change operation, a device is provided, which comprises a touch screen display and a controller. The touch screen display displays an operation screen including a plurality of icons. In the adjustment mode for adjusting the arrangement of two icons displayed on the operation screen, when a specific gesture is detected, the controller interchanges the positions of the two icons in accordance with the gesture.

### SUMMARY

Accordingly, the present disclosure provides an icon position interchanging method, device, computer program, and terminal in accordance with claims which follow.

It should be understood that the detailed description below is only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing an icon position interchanging method according to an embodiment.
Fig. 2 is a flow chart showing an icon position interchanging method according to an embodiment.
Fig. 3 is a schematic diagram illustrating operations during icon position interchanging according to an exemplary embodiment.
Fig. 4 is a schematic diagram illustrating operations during icon position interchanging according to an exemplary embodiment.
Fig. 5 is a block diagram illustrating an icon position interchanging device according to an embodiment.
Fig. 6 is a block diagram illustrating an icon position interchanging device 600 according to an exemplary embodiment.

### DETAILED DESCRIPTION

In order to make a purpose, technical solutions and advantages of the present disclosure clearer, the embodiments of the present disclosure will be further described below with reference to the accompanying drawings in detail.

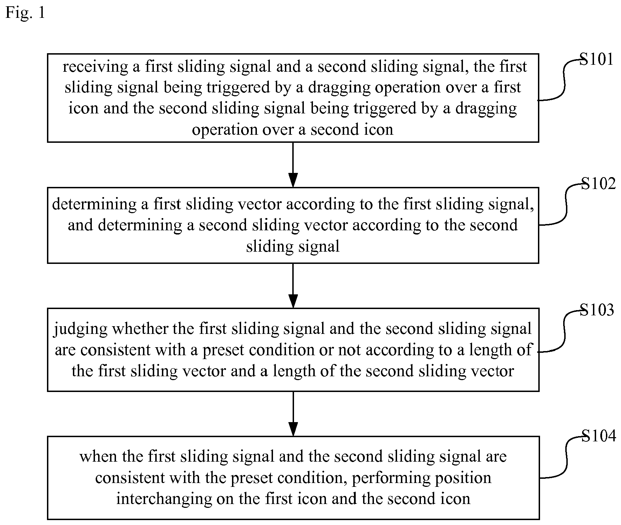

Fig. 1 is a flow chart showing an icon position interchanging method according to an embodiment. As shown in Fig. 1, the method includes the following steps.

Step 101: receiving a first sliding signal and a second sliding signal, the first sliding signal being triggered by a dragging operation over a first icon and the second sliding signal being triggered by a dragging operation over a second icon.

Step 102: determining a first sliding vector according to the first sliding signal, and determining a second sliding vector according to the second sliding signal.

Step 103: determining whether the first sliding signal and the second sliding signal are consistent with a preset condition or not according to a length of the first sliding vector and a length of the second sliding vector.

Step 104: when the first sliding signal and the second sliding signal are consistent with the preset condition, performing position interchanging on the first icon and the second icon.

According to the icon position interchanging method provided by the present disclosure, the positions of the first icon and the second icon are interchanged only when the first sliding signal and the second sliding signal are consistent with the preset condition in an icon position interchanging process, so that mistaken recognition of a random dragging operation as an icon position interchanging operation is further avoided, and accuracy in recognition of an icon position interchanging operation intention is improved.

In one embodiment of the present disclosure, determining the first sliding vector according to the first sliding signal and determining the second sliding vector according to the second sliding signal includes: determining an initial position of the dragging operation related to the first sliding signal as a starting point of the first sliding vector, and determining a stop position of the dragging operation related to the first sliding signal as an endpoint of the first sliding vector; and determining an initial position of the dragging operation related to the second sliding signal as a starting point of the second sliding vector, and determining a stop position of the dragging operation related to the second sliding signal as an endpoint of the second sliding vector.

In one embodiment of the present disclosure, determining whether the first sliding signal and the second sliding signal are consistent with the preset condition or not according to the length of the first sliding vector and the length of the second sliding vector includes: acquiring a distance between an interface display position of the first icon and an interface display position of the second icon; and when a numerical relationship among the distance, the length of the first sliding vector and the length of the second sliding vector is consistent with a preset numerical relationship, determining that the first sliding signal and the second sliding signal are consistent with the preset condition, wherein the preset numerical relationship includes that:
a ratio of the length of the first sliding vector to the distance exceeds a first preset value;
a ratio of the length of the second sliding vector to the distance exceeds a second preset value; and
a ratio of a sum of the length of the first sliding vector and the length of the second sliding vector to the distance exceeds a third preset value.

In one embodiment of the present disclosure, before determining whether the first sliding signal and the second sliding signal are consistent with the preset condition or not according to the length of the first sliding vector and the length of the second sliding vector, the method further includes: determining whether the first sliding signal and the second sliding signal are sliding signals that are moving, or are directed, towards each other or not according to a direction of the first sliding vector and a direction of the second sliding vector; if the first sliding signal and the second sliding signal are sliding signals that are moving, or are directed, towards each other, executing the step of determining whether the first sliding signal and the second sliding signal are consistent with the preset condition or not; and if the first sliding signal and the second sliding signal are not sliding signals that are moving, or are directed, towards each other, stopping icon position interchanging.

In one embodiment of the present disclosure, determining whether the first sliding signal and the second sliding signal are sliding signals that are moving, or are directed, towards each other or not according to the direction of the first sliding vector and the direction of the second sliding vector includes: determining a connecting line between the interface display position of the first icon and the interface display position of the second icon as a reference line; acquiring an angle between the direction of the first sliding vector and the reference line as a first angle, and acquiring an angle between the direction of the second sliding vector and the reference line as a second angle; and when the first angle is within a first preset angle range and the second angle is within a second preset angle range, determining that the first sliding signal and the second sliding signal are sliding signals that are moving, or are directed, towards each other.

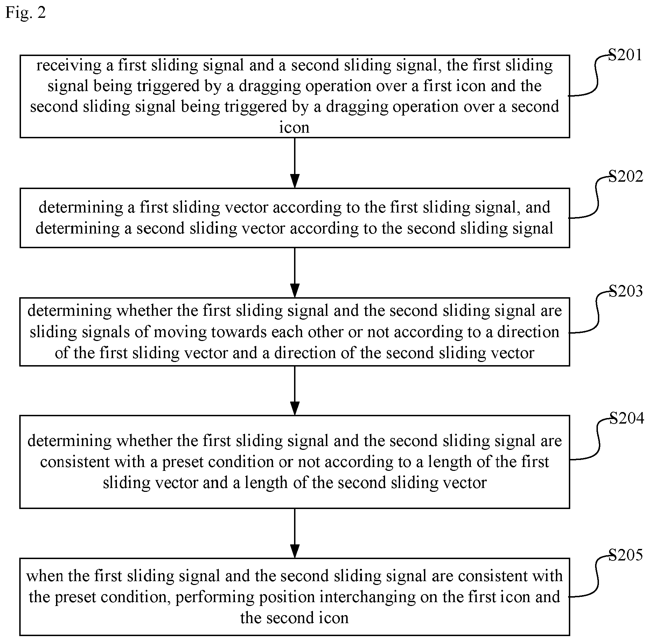

Fig. 2 is a flow chart showing an icon position interchanging method according to an embodiment. The method may be applied to a terminal, and as shown in Fig. 2, the method includes the following steps.

Step 201: receiving a first sliding signal and a second sliding signal, the first sliding signal being triggered by a dragging operation over a first icon and the second sliding signal being triggered by a dragging operation over a second icon.

In the embodiment of the present disclosure, the sliding signals are both triggered on the basis of the dragging operations of a user over the icons on a touch display screen. When the touch display screen is a capacitive touch screen, a triggering process of each sliding signal is implemented as follows: When the user touches the capacitive touch screen with a finger, a coupling capacitance is formed at a contact point at which the finger contacts the capacitive touch screen. A high-frequency current is generated between the coupling capacitance and each of a plurality of electrodes at different positions. An intensity of the high-frequency current is proportional to a distance between the contact point and the corresponding electrode. Therefore, a position coordinate of the contact point can be determined by measuring the intensity of the high-frequency current generated in each of the plurality of electrodes to determine the distance between the contact point and each electrode. If the position coordinate of the contact point corresponds to a display position of an icon, it is considered that the contact is associated with an operation over the icon. If the finger executes a dragging operation on the basis of the contact point, the contact point with the capacitive touch screen will continuously change, and the position coordinate of the contact point will also continuously change. Therefore, when the position coordinate of the contact point continuously changes, a sliding signal is triggered.

It is noted that the abovementioned triggering of the sliding signal is only described with a capacitive touch display screen-based implementation scene as an example, and in practice, the sliding signal may also be triggered on the basis of a touch display screen based on other forms such as a resistance type, an infrared type and a surface acoustic wave type. Moreover, the abovementioned triggering of the sliding signal is only described with an implementation scene of performing a dragging operation with the finger as an example, and during the practical application, the sliding signal may also be triggered by a dragging operation executed with other devices such as a stylus. Triggering manners for the sliding signal are not specifically limited in the present disclosure.

Triggering of the first sliding signal and the second sliding signal may be synchronously detected on the basis of a multi-touch technology. In the embodiment of the present disclosure, the first sliding signal and the second sliding signal should be signals which are simultaneously triggered; and however, in practice, there may exist a certain error for a determination of simultaneous triggering, and for example, when an interval between triggering time of the first sliding signal and triggering time of the second sliding signal is smaller than a preset value, it is determined that the first sliding signal and the second sliding signal are signals which are simultaneously triggered.

Step 202: determining a first sliding vector according to the first sliding signal, and determining a second sliding vector according to the second sliding signal.

In order to accurately recognize an icon operation intention, the sliding vectors of the sliding signals are determined in the step in the embodiment of the present disclosure, wherein the sliding vector is configured to indicate a length of the dragging operation and a direction of the dragging operation for triggering the sliding signal to further determine the operation intention on the basis of the length and the direction in a subsequent step so as to improve accuracy in recognition of the operation intention.

In the embodiment of the present disclosure, a method for determining the sliding vectors of the sliding signals may be implemented as follows:
determining an initial position of the dragging operation related to the first sliding signal as a starting point of the first sliding vector, and determining a stop position of the dragging operation related to the first sliding signal as an endpoint of the first sliding vector; and determining an initial position of the dragging operation related to the second sliding signal as a starting point of the second sliding vector, and determining a stop position of the dragging operation related to the second sliding signal as an endpoint of the second sliding vector.

Under the condition that the dragging operation is executed by the finger, when the finger starts contacting with the touch display screen, the position of the contact point is the initial position of the dragging operation; then the finger slides under the condition of keeping contacting with the touch display screen; and when the finger leaves the touch display screen, a position of a leaving point is the stop position of the dragging operation.

Step 203: determining whether the first sliding signal and the second sliding signal are sliding signals that are moving, or are directed, towards each other or not according to a direction of the first sliding vector and a direction of the second sliding vector.

In order to avoid mistaken recognition of a dragging operation in a random direction as icon position interchanging operation, the directions of the sliding vectors are determined in the embodiment of the present disclosure, and icon position interchanging is performed only when the directions of the sliding vectors are consistent with a preset condition.

In the embodiment of the present disclosure, if the first sliding signal and the second sliding signal are sliding signals that are moving, or are directed, towards each other, Step 204 is subsequently executed; and on the contrary, if the first sliding signal and the second sliding signal are not sliding signals that are moving, or are directed, towards each other, icon position interchanging is stopped.

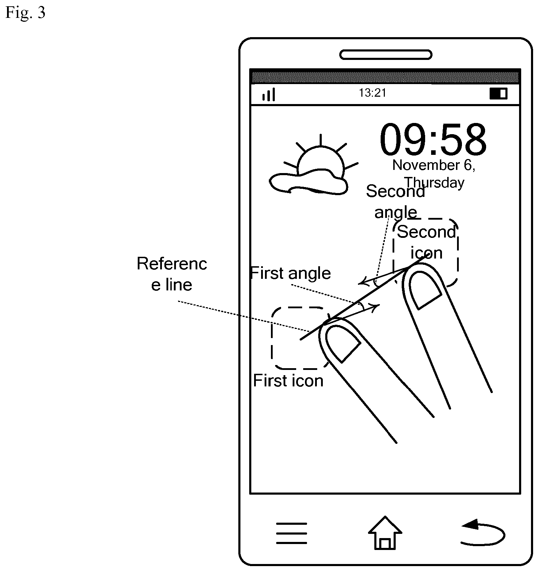

The sliding signals that are moving, or are directed, towards each other refer to two sliding signals of which directions of dragging move to each other, and the embodiment of the present disclosure provides at least one specific implementation method for determining whether the two sliding signals are sliding signals that are moving, or are directed, towards each other or not as follows, including:
determining a connecting line between an interface display position of the first icon and an interface display position of the second icon as a reference line; and acquiring an angle between the direction of the first sliding vector and the reference line as a first angle, and acquiring an angle between the direction of the second sliding vector and the reference line as a second angle. For example, as shown in Fig. 3, the display position of the icon may be a regional position, and a starting point of the connecting line may further be a central point of the regional position. It is noted that description is made only with the condition that the starting point is the central point of the regional position as an example in Fig. 3, and in practice, the starting point of the connecting line may also be another point, for example, a vertex angle point, in the display position, which is not specifically limited in the present disclosure.

In the present disclosure, considering that dragging operations do usually not move strictly to each other in practice, the method for determining whether to move to each other should have a certain error permission mechanism. As shown in Fig. 3, when the first angle is within a first preset angle range and the second angle is within a second preset angle range, it is determined that the first sliding signal and the second sliding signal are sliding signals that are moving, or are directed, towards each other. The first and second preset angle ranges may be specifically set according to a practical condition, and for example, the first preset angle range is set to be from +15 degrees to -15 degrees, and if the first angle is -11 degrees, the first angle is within the first preset angle range. It is noted that dragging operations may be executed through two different fingers in practice, and thus a first angle and a second angle, which are different, may be generated when the dragging operations are executed. Therefore, the first preset angle range and the second preset angle range may further be set to be same or different. Specific numerical values of the first and second preset angle ranges are not limited in the present disclosure.

It is noted that the embodiment of the present disclosure is described only with addition of the step of performing determination according to the directions of the sliding vectors as an example, and in practice, for purpose of saving processing resources, Step 204 may also be directly executed without determining the directions of the sliding vectors. There are no specific limits made in the present disclosure.

Step 204: determining whether the first sliding signal and the second sliding signal are consistent with a preset condition or not according to a length of the first sliding vector and a length of the second sliding vector, and if YES, executing Step 205.

In order to avoid mistaken recognition of a random dragging operation as an icon position interchanging operation, the lengths of the sliding vectors are determined in the embodiment of the present disclosure, and icon position interchanging is performed only when the lengths of the sliding vectors are consistent with a preset condition.

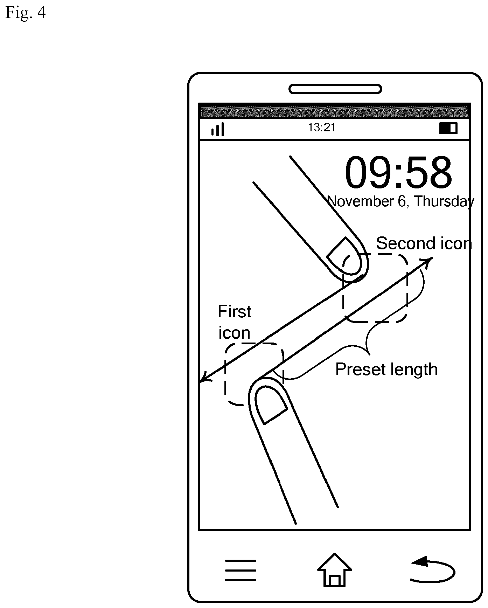

In the present disclosure, it is realized that, if only whether the lengths of the sliding vectors exceed a preset length or not is taken as a standard for determining whether the sliding signals are consistent with the preset condition or not, the following problem easily occurs: if the preset length is set to be excessively great, it is inconvenient for the user to execute a dragging operation consistent with the condition, and for example, as shown in Fig. 4, when the preset length is set to be great, the user may not implement the dragging operation consistent with the condition with two fingers of a single hand; and if the preset length is set to be excessively small, it is still difficult to avoid mistaken recognition of a random dragging operation as an icon position interchanging operation. Based on such a realization, the lengths of the sliding vectors and a distance between the icons of which the positions are to be interchanged are creatively combined as the standard for determining whether the sliding signals are consistent with the preset condition or not in the present disclosure, and thus mistaken recognition of a random dragging operation as an icon position interchanging operation is further avoided on the basis of ensuring convenience in operation of the user. In the embodiment of the present disclosure, a specific implementation manner for the determination is implemented by:
acquiring a distance between the interface display position of the first icon and the interface display position of the second icon; and when a numerical relationship among the distance, the length of the first sliding vector and the length of the second sliding vector is consistent with a preset numerical relationship, determining that the first sliding signal and the second sliding signal are consistent with the preset condition.

Wherein, the preset numerical relationship includes:
numerical relationship 1: a ratio of the length of the first sliding vector to the distance exceeds a first preset value;
numerical relationship 2: a ratio of the length of the second sliding vector to the distance exceeds a second preset value; and
numerical relationship 3: a ratio of a sum of the length of the first sliding vector and the length of the second sliding vector to the distance exceeds a third preset value.

All of the first preset value, the second preset value and the third preset value may be set according to a practical application condition. The first preset value and the second preset value may be set into the same numerical value, and may also be set into different numerical values, and the third preset value is required to be greater than the first preset value and the second preset value.

The numerical relationships 1 to 3 are combined into the standard for determining whether the sliding signals are consistent with the preset condition or not. Under the condition that the numerical relationships 1 to 3 are combined, the standard for determining whether the sliding signals are consistent with the preset condition or not is that: the ratio of the length of the first sliding vector to the distance exceeds the first preset value, the ratio of the length of the second sliding vector to the distance exceeds the second preset value and the ratio of the sum of the length of the first sliding vector and the length of the second sliding vector to the distance exceeds the third preset value.

In an example not being part of the invention, the preset numerical relationship among the lengths of the sliding vectors and the distance between the icons of which the positions are to be interchanged may also be another relationship in practice. For example, the sum of the lengths of the sliding vectors exceeds the distance between the icons of which the positions are to be interchanged. The other preset numerical relationship is not specifically limited in the present disclosure.

Step 205: when the first sliding signal and the second sliding signal are consistent with the preset condition, performing position interchanging on the first icon and the second icon.

Performing position interchanging on the first icon and the second icon includes: issuing a display refreshing instruction containing interchanging information, the interchanging information indicating interchange of interface display position information of the first icon and the second icon and the display refreshing instruction enabling the display screen to display a display interface after the interface display positions are interchanged. It is noted that performing position interchanging on the first icon and the second icon further includes interchanging the interface display position information of the first icon and the second icon in a memory so as to display the first icon and second icon of which the positions have been interchanged on the display screen after next startup.

According to the icon position interchanging method provided by the embodiment of the present disclosure, the first sliding signal and the second sliding signal are received, the first sliding signal being triggered by the dragging operation over the first icon and the second sliding signal being triggered by the dragging operation over the second icon; the first sliding vector is determined according to the first sliding signal, and the second sliding vector is determined according to the second sliding signal; whether the first sliding signal and the second sliding signal are consistent with the preset condition or not is determined according to the length of the first sliding vector and the length of the second sliding vector; and when the first sliding signal and the second sliding signal are consistent with the preset condition, position interchanging is performed on the first icon and the second icon. By adopting such an icon position interchanging method, the positions of the first icon and the second icon are interchanged only when the first sliding signal and the second sliding signal are consistent with the preset condition in an icon position interchanging process, so that mistaken recognition of a random dragging operation as an icon position interchanging operation is further avoided, and accuracy in recognition of an icon position interchanging operation intention is improved.

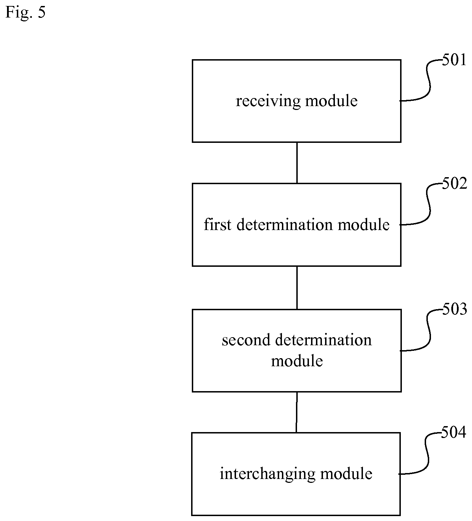

Fig. 5 is a block diagram illustrating an icon position interchanging device according to an embodiment. Referring to Fig. 5, the device includes: a receiving module 501, a first determination module 502, a second determination module 503 and an interchanging module 504.

The receiving module 501 is configured to receive a first sliding signal and a second sliding signal, the first sliding signal being triggered by a dragging operation over a first icon and the second sliding signal being triggered by a dragging operation over a second icon.

The first determination module 502 is configured to determine a first sliding vector according to the first sliding signal, and determine a second sliding vector according to the second sliding signal.

The second determination module 503 is configured to determine whether the first sliding signal and the second sliding signal are consistent with a preset condition or not according to a length of the first sliding vector and a length of the second sliding vector.

The interchanging module 504 is configured to, when the first sliding signal and the second sliding signal are consistent with the preset condition, perform position interchanging on the first icon and the second icon.

In one embodiment of the present disclosure, the first determination module 502 is configured to:
determine an initial position of the dragging operation related to the first sliding signal as a starting point of the first sliding vector, and determine a stop position of the dragging operation related to the first sliding signal as an endpoint of the first sliding vector; and
determine an initial position of the dragging operation related to the second sliding signal as a starting point of the second sliding vector, and determine a stop position of the dragging operation related to the second sliding signal as an endpoint of the second sliding vector.

In one embodiment of the present disclosure, the second determination module 503 is configured to:
acquire a distance between an interface display position of the first icon and an interface display position of the second icon; and
when a numerical relationship among the distance, the length of the first sliding vector and the length of the second sliding vector is consistent with a preset numerical relationship, determine that the first sliding signal and the second sliding signal are consistent with the preset condition,
wherein the preset numerical relationship includes that:
   a ratio of the length of the first sliding vector to the distance exceeds a first preset value;
   a ratio of the length of the second sliding vector to the distance exceeds a second preset value; and
   a ratio of a sum of the length of the first sliding vector and the length of the second sliding vector to the distance exceeds a third preset value.

In one embodiment of the present disclosure, the second determination module 503 is further configured to:
determine whether the first sliding signal and the second sliding signal are sliding signals that are moving, or are directed, towards each other or not according to a direction of the first sliding vector and a direction of the second sliding vector;
if the first sliding signal and the second sliding signal are sliding signals that are moving, or are directed, towards each other, execute the step of determining whether the first sliding signal and the second sliding signal are consistent with the preset condition or not; and
if the first sliding signal and the second sliding signal are not sliding signals that are moving, or are directed, towards each other, stop icon position interchanging.

In one embodiment of the present disclosure, the second determination module 503 is configured to:
determine a connecting line between the interface display position of the first icon and the interface display position of the second icon as a reference line;
acquire an between the direction of the first sliding vector and the reference line as a first angle, and acquire an angle between the direction of the second sliding vector and the reference line as a second angle; and
when the first angle is within a first preset angle range and the second angle is within a second preset angle range, determine that the first sliding signal and the second sliding signal are sliding signals that are moving, or are directed, towards each other.

According to the icon position interchanging device provided by the embodiment of the present disclosure, the first sliding signal and the second sliding signal are received, the first sliding signal being triggered by the dragging operation over the first icon and the second sliding signal being triggered by the dragging operation over the second icon; the first sliding vector is determined according to the first sliding signal, and the second sliding vector is determined according to the second sliding signal; whether the first sliding signal and the second sliding signal are consistent with the preset condition or not is determined according to the length of the first sliding vector and the length of the second sliding vector; and when the first sliding signal and the second sliding signal are consistent with the preset condition, position interchanging is performed on the first icon and the second icon. By adopting such an icon position interchanging method, the positions of the first icon and the second icon are interchanged only when the first sliding signal and the second sliding signal are consistent with the preset condition in an icon position interchanging process, so that mistaken recognition of a random dragging operation as an icon position interchanging operation is further avoided, and accuracy in recognition of an icon position interchanging operation intention is improved.

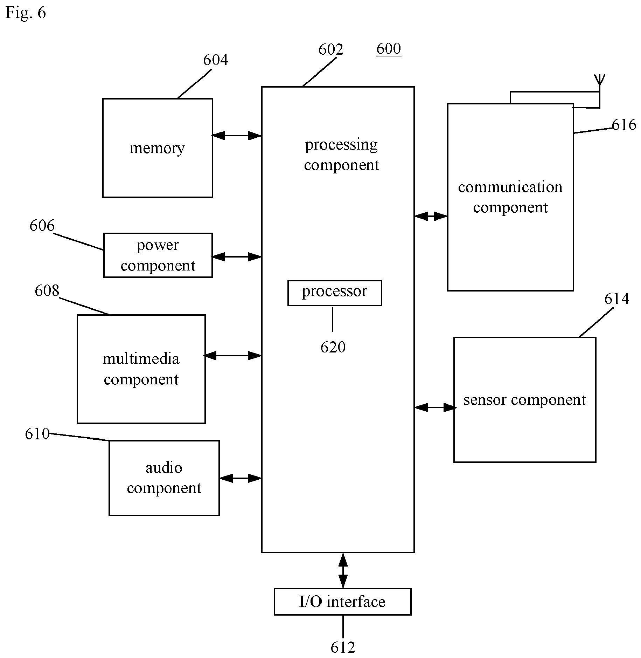

Fig. 6 is a block diagram illustrating an icon position interchanging device 600 according to an exemplary embodiment. For example, the device 600 may be a mobile phone, a computer, a digital broadcast terminal, a messaging device, a gaming console, a tablet, a medical device, exercise equipment, a personal digital assistant and the like.

Referring to Fig. 6, the device 600 may include one or more of the following components: a processing component 602, a memory 604, a power component 606, a multimedia component 608, an audio component 610, an Input/Output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the abovementioned methods. Moreover, the processing component 602 may include one or more modules which facilitate interaction between the processing component 602 and other components. For instance, the processing component 602 may include a multimedia module to facilitate interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 606 provides power for various components of the device 600. The power component 606 may include a power management system, one or more power supplies, and other components associated with the generation, management and distribution of power for the device 600.

The multimedia component 608 includes a screen providing an output interface between the device 600 and the user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a period of time and pressure associated with the touch or swipe action. In some embodiments, the multimedia component 608 includes a front camera and/or a rear camera. The front camera and/or the rear camera may receive external multimedia data when the device 600 is in an operation mode, such as a photographing mode or a video mode. Each of the front camera and the rear camera may be a fixed optical lens system or have focus and optical zoom capabilities.

The audio component 610 is configured to output and/or input an audio signal. For example, the audio component 610 includes a microphone (MIC) configured to receive an external audio signal when the device 600 is in the operation mode, such as a call mode, a recording mode and a voice recognition mode. The received audio signal may be further stored in the memory 604 or transmitted via the communication component 616. In some embodiments, the audio component 610 further includes a speaker configured to output an audio signal.

The I/O interface 612 provides an interface between the processing component 602 and a peripheral interface module, such as a keyboard, a click wheel, a button and the like. The button may include, but are not limited to, a home button, a volume button, a starting button and a locking button.

The sensor component 614 includes one or more sensors configured to provide status assessment of various aspects for the device 600. For instance, the sensor component 614 may detect an on/off status of the device 600, relative positioning of components, such as a display and small keyboard of the device 600, a change in a position of the device 600 or a component of the device 600, presence or absence of contact between the user and the device 600, orientation or acceleration/deceleration of the device 600 and a change in temperature of the device 600. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor, configured for use in an imaging application. In some embodiments, the sensor component 614 may also include an acceleration sensor, a gyroscope sensor, a magnetic sensor, a pressure sensor or a temperature sensor.

The communication component 616 is configured to facilitate wired or wireless communication between the device 600 and other devices. The device 600 may access a communication-standard-based wireless network, such as a Wireless Fidelity (WiFi) network, a 2nd-Generation (2G) or 3rd-Generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and other technologies.

In the exemplary embodiment, the device 600 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the icon position interchanging method shown in Fig. 1 or Fig. 2.

In the exemplary embodiment, there is also provided a non-transitory computer-readable storage medium including instructions, such as included in the memory 604, executable by the processor 620 in the device 600 to implement the abovementioned methods. For example, the non-transitory computer-readable storage medium may be a ROM, a Compact Disc Read-Only Memory (CD-ROM), a magnetic tape, a floppy disc, an optical data storage device and the like.

In an exemplary embodiment, there is also provided a non-transitory computer-readable storage medium, and when the instructions in the storage medium are executed by the processor of the terminal, the device may execute the icon position interchanging method shown in Fig. 1 or Fig. 2.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice of the present disclosure disclosed here. It is intended that the specification and examples be considered as exemplary only, with a true scope of the present disclosure being indicated by the following claims.

It will be appreciated that the present disclosure is not limited to the precise structures that have been described above and illustrated in the accompanying drawings, and that various modifications and changes may be made without departing from the scope thereof. It is intended that the scope of the present disclosure only be limited by the appended claims.

### INDUSTRIAL APPLICATION

According to the icon position interchanging method provided by the present disclosure, the first sliding signal and the second sliding signal are received, the first sliding signal being triggered by the dragging operation over the first icon and the second sliding signal being triggered by the dragging operation over the second icon; the first sliding vector is determined according to the first sliding signal, and the second sliding vector is determined according to the second sliding signal; whether the first sliding signal and the second sliding signal are consistent with the preset condition or not is determined according to the length of the first sliding vector and the length of the second sliding vector; and when the first sliding signal and the second sliding signal are consistent with the preset condition, position interchanging is performed on the first icon and the second icon. By adopting such an icon position interchanging method, the positions of the first icon and the second icon are interchanged only when the first sliding signal and the second sliding signal are consistent with the preset condition in an icon position interchanging process, so that mistaken recognition of a random dragging operation as an icon position interchanging operation is further avoided, and accuracy in recognition of an icon position interchanging operation intention is improved.

## Claims

1. An icon position interchanging method, the method comprising:
receiving (S101, S201) a first sliding signal and a second sliding signal, the first sliding signal being triggered by a dragging operation over a first icon and the second sliding signal being triggered by a dragging operation over a second icon;
determining (S102, S202) a first sliding vector according to the first sliding signal, and determining a second sliding vector according to the second sliding signal;
determining (S103, S204) whether the first sliding signal and the second sliding signal are consistent with a preset condition or not according to a length of the first sliding vector and a length of the second sliding vector; and
when the first sliding signal and the second sliding signal are consistent with the preset condition, performing (S104, S205) position interchanging on the first icon and the second icon;
**characterized in that** the step of determining (S103, S204) whether the first sliding signal and the second sliding signal are consistent with the preset condition or not according to the length of the first sliding vector and the length of the second sliding vector comprises:
acquiring a distance between an interface display position of the first icon and an interface display position of the second icon; and
when a numerical relationship between the distance, the length of the first sliding vector and the length of the second sliding vector is consistent with a preset numerical relationship, determining that the first sliding signal and the second sliding signal are consistent with the preset condition,
the preset numerical relationship comprises that:
a ratio of the length of the first sliding vector to the distance exceeds a first preset value;
a ratio of the length of the second sliding vector to the distance exceeds a second preset value; and
a ratio of a sum of the length of the first sliding vector and the length of the second sliding vector to the distance exceeds a third preset value.

2. The method according to claim 1, wherein the step of determining (S102, S202) the first sliding vector according to the first sliding signal and determining the second sliding vector according to the second sliding signal comprises:
determining an initial position of the dragging operation related to the first sliding signal as a starting point of the first sliding vector, and determining a stop or finish position of the dragging operation related to the first sliding signal as an endpoint of the first sliding vector; and
determining an initial position of the dragging operation related to the second sliding signal as a starting point of the second sliding vector, and determining a stop position of the dragging operation related to the second sliding signal as an endpoint of the second sliding vector.

3. The method according to any preceding claim, further comprising:
before determining (S204) whether the first sliding signal and the second sliding signal are consistent with the preset condition or not according to the length of the first sliding vector and the length of the second sliding vector,
determining (S203) whether the first sliding signal and the second sliding signal are sliding signals that are moving towards each other or not according to a direction of the first sliding vector and a direction of the second sliding vector;
in the case that the first sliding signal and the second sliding signal are sliding signals that are moving towards each other, executing the step of determining whether the first sliding signal and the second sliding signal are consistent with the preset condition or not; and
in the case that the first sliding signal and the second sliding signal are not sliding signals that are moving towards each other, stopping icon position interchanging.

4. The method according to claim 3, wherein the step of determining (S203) whether the first sliding signal and the second sliding signal are sliding signals that are moving towards each other or not according to the direction of the first sliding vector and the direction of the second sliding vector comprises:
determining a connecting line between the interface display position of the first icon and the interface display position of the second icon as a reference line;
acquiring an angle between the direction of the first sliding vector and the reference line as a first angle, and acquiring an angle between the direction of the second sliding vector and the reference line as a second angle; and
when the first angle is within a first preset angle range and the second angle is within a second preset angle range, determining that the first sliding signal and the second sliding signal are sliding signals that are moving towards each other.

5. An icon position interchanging device, the device comprising:
a receiving module (501), configured to receive a first sliding signal and a second sliding signal, the first sliding signal being triggered by a dragging operation over a first icon and the second sliding signal being triggered by a dragging operation over a second icon;
a first determination module (502), configured to determine a first sliding vector according to the first sliding signal, and determine a second sliding vector according to the second sliding signal;
a second determination module (503), configured to determine whether the first sliding signal and the second sliding signal are consistent with a preset condition or not according to a length of the first sliding vector and a length of the second sliding vector; and
an interchanging module (504), configured to, when the first sliding signal and the second sliding signal are consistent with the preset condition, perform position interchanging on the first icon and the second icon;
**characterized in that** the second determination module (503) is configured to:
acquire a distance between an interface display position of the first icon and an interface display position of the second icon; and
when a numerical relationship between the distance, the length of the first sliding vector and the length of the second sliding vector is consistent with a preset numerical relationship, determine that the first sliding signal and the second sliding signal are consistent with the preset condition,
the preset numerical relationship comprises that:
a ratio of the length of the first sliding vector to the distance exceeds a first preset value;
a ratio of the length of the second sliding vector to the distance exceeds a second preset value; and
a ratio of a sum of the length of the first sliding vector and the length of the second sliding vector to the distance exceeds a third preset value.

6. The device according to claim 5, wherein the first determination module (502) is configured to:
determine an initial position of the dragging operation related to the first sliding signal as a starting point of the first sliding vector, and determine a stop or finish position of the dragging operation related to the first sliding signal as an endpoint of the first sliding vector; and
determine an initial position of the dragging operation related to the second sliding signal as a starting point of the second sliding vector, and determine a stop position of the dragging operation related to the second sliding signal as an endpoint of the second sliding vector.

7. The device according to any of claims 5 to 6, wherein the second determination module (503) is further configured to:
determine whether the first sliding signal and the second sliding signal are sliding signals that are moving towards each other or not according to a direction of the first sliding vector and a direction of the second sliding vector;
in the case that the first sliding signal and the second sliding signal are sliding signals that are moving towards each other, execute the step of determining whether the first sliding signal and the second sliding signal are consistent with the preset condition or not; and
in the case that the first sliding signal and the second sliding signal are not sliding signals that are moving towards each other, stop icon position interchanging.

8. The device according to claim 7, wherein the second determination module (503) is configured to:
determine a connecting line between the interface display position of the first icon and the interface display position of the second icon as a reference line;
acquire an angle between the direction of the first sliding vector and the reference line as a first angle, and acquire an angle between the direction of the second sliding vector and the reference line as a second angle; and
when the first angle is within a first preset angle range and the second angle is within a second preset angle range, determine that the first sliding signal and the second sliding signal are sliding signals that are moving towards each other.

9. A computer program including instructions for executing the steps of the icon position interchanging method according to any one of claims 1 to 4 when said program is executed by a computer.

10. A terminal configured to carry out the method of any of claims 1 to 4.

## Patentansprüche

1. Icon-Positionswechselverfahren, wobei das Verfahren Folgendes beinhaltet:
Empfangen (S101, S201) eines ersten Verschiebungssignals und eines zweiten Verschiebungssignals, wobei das erste Verschiebungssignal durch einen Ziehvorgang über ein erstes Icon ausgelöst wird und das zweite Verschiebungssignal durch einen Ziehvorgang über ein zweites Icon ausgelöst wird;
Bestimmen (S102, S202) eines ersten Verschiebungsvektors gemäß dem ersten Verschiebungssignal, und Bestimmen eines zweiten Verschiebungsvektors gemäß dem zweiten Verschiebungssignal;
Feststellen (S103, S204), ob das erste Verschiebungssignal und das zweite Verschiebungssignal mit einer voreingestellten Bedingung übereinstimmen oder nicht, je nach einer Länge des ersten Verschiebungsvektors und einer Länge des zweiten Verschiebungsvektors; und
Durchführen (S104, S205), wenn das erste Verschiebungssignal und das zweite Verschiebungssignal mit der voreingestellten Bedingung übereinstimmen, eines Positionswechsels an dem ersten Icon und dem zweiten Icon;
**dadurch gekennzeichnet, dass** der Schritt des Feststellens (S103, S204), ob das erste Verschiebungssignal und das zweite Verschiebungssignal mit der voreingestellten Bedingung übereinstimmen oder nicht, ja nach der Länge des ersten Verschiebungsvektors und der Länge des zweiten Verschiebungsvektors Folgendes beinhaltet:
Erfassen eines Abstands zwischen einer Schnittstellenanzeigeposition des ersten Icons und einer Schnittstellenanzeigeposition des zweiten Icons; und
Feststellen, wenn eine numerische Beziehung zwischen dem Abstand, der Länge des ersten Verschiebungsvektors und der Länge des zweiten Verschiebungsvektors mit einer voreingestellten numerischen Beziehung übereinstimmt, dass das erste Verschiebungssignal und das zweite Verschiebungssignal mit der voreingestellten Bedingung übereinstimmen,
wobei die voreingestellte numerische Beziehung Folgendes umfasst:
ein Verhältnis der Länge des ersten Verschiebungsvektors zum Abstand übersteigt einen ersten voreingestellten Wert;
ein Verhältnis der Länge des zweiten Verschiebungsvektors zum Abstand übersteigt einen zweiten voreingestellten Wert; und
ein Verhältnis einer Summe der Länge des ersten Verschiebungsvektors und der Länge des zweiten Verschiebungsvektors zum Abstand übersteigt einen dritten voreingestellten Wert.

2. Verfahren nach Anspruch 1, wobei der Schritt (S102, S202) des Bestimmens des ersten Verschiebungsvektors gemäß dem ersten Verschiebungssignal und des Bestimmens des zweiten Verschiebungsvektors gemäß dem zweiten Verschiebungssignal Folgendes beinhaltet:
Bestimmen einer Anfangsposition des Ziehvorgangs in Bezug auf das erste Verschiebungssignal als Startpunkt des ersten Verschiebungsvektors, und Bestimmen einer Stopp- oder Endposition des Ziehvorgangs in Bezug auf das erste Verschiebungssignal als Endpunkt des ersten Verschiebungsvektors; und
Bestimmen einer Anfangsposition des Ziehvorgangs in Bezug auf das zweite Verschiebungssignal als Startpunkt des zweiten Verschiebungsvektors und Bestimmen einer Stoppposition des Ziehvorgangs in Bezug auf das zweite Verschiebungssignal als Endpunkt des zweiten Verschiebungsvektors.

3. Verfahren nach einem vorherigen Anspruch, das ferner Folgendes beinhaltet:
vor dem Feststellen (S204), ob das erste Verschiebungssignal und das zweite Verschiebungssignal mit der voreingestellten Bedingung übereinstimmen oder nicht, ja nach der Länge des ersten Verschiebungsvektors und der Länge des zweiten Verschiebungsvektors:
Feststellen (S203), ob das erste Verschiebungssignal und das zweite Verschiebungssignal Verschiebungssignale sind, die sich aufeinander zu bewegen oder nicht, gemäß einer Richtung des ersten Verschiebungsvektors und einer Richtung des zweiten Verschiebungsvektors;
Ausführen, falls das erste Verschiebungssignal und das zweite Verschiebungssignal Verschiebungssignale sind, die sich aufeinander zu bewegen, des Schritts des Feststellens, ob das erste Verschiebungssignal und das zweite Verschiebungssignal mit der voreingestellten Bedingung übereinstimmen oder nicht; und
Stoppen, falls das erste Verschiebungssignal und das zweite Verschiebungssignal keine Verschiebungssignale sind, die sich aufeinander zu bewegen, des Wechsels der Icon-Positionen.

4. Verfahren nach Anspruch 3, wobei der Schritt des Feststellens (S203), ob das erste Verschiebungssignal und das zweite Verschiebungssignal Verschiebungssignale sind, die sich aufeinander zu bewegen oder nicht, je nach der Richtung des ersten Verschiebungsvektors und der Richtung des zweiten Verschiebungsvektors Folgendes beinhaltet:
Bestimmen einer Verbindungslinie zwischen der Schnittstellenanzeigeposition des ersten Icons und der Schnittstellenanzeigeposition des zweiten Icons als Referenzlinie;
Erfassen eines Winkels zwischen der Richtung des ersten Verschiebungsvektors und der Referenzlinie als einen ersten Winkel, und Erfassen eines Winkels zwischen der Richtung des zweiten Verschiebungsvektors und der Referenzlinie als einen zweiten Winkel; und
Feststellen, wenn der erste Winkel innerhalb eines ersten voreingestellten Winkelbereichs liegt und der zweite Winkel innerhalb eines zweiten voreingestellten Winkelbereichs liegt, dass das erste Verschiebungssignal und das zweite Verschiebungssignal Verschiebungssignale sind, die sich aufeinander zu bewegen.

5. Icon-Positionswechselvorrichtung, wobei die Vorrichtung Folgendes umfasst:
ein Empfangsmodul (501), konfiguriert zum Empfangen eines ersten Verschiebungssignals und eines zweiten Verschiebungssignals, wobei das erste Verschiebungssignal durch einen Ziehvorgang über ein erstes Icon ausgelöst wird und das zweite Verschiebungssignal durch einen Ziehvorgang über ein zweites Icon ausgelöst wird;
ein erstes Bestimmungsmodul (502), konfiguriert zum Bestimmen eines ersten Verschiebungsvektors gemäß dem ersten Verschiebungssignal und zum Bestimmen eines zweiten Verschiebungsvektors gemäß dem zweiten Verschiebungssignal;
ein zweites Bestimmungsmodul (503), konfiguriert zum Feststellen, ob das erste Verschiebungssignal und das zweite Verschiebungssignal mit einer voreingestellten Bedingung übereinstimmen oder nicht, je nach einer Länge des ersten Verschiebungsvektors und einer Länge des zweiten Verschiebungsvektors; und
ein Wechselmodul (504), konfiguriert zum Durchführen, wenn das erste Verschiebungssignal und das zweite Verschiebungssignal mit der voreingestellten Bedingung übereinstimmen, eines Positionswechsels an dem ersten Icon und dem zweiten Icon;
**dadurch gekennzeichnet, dass** das zweite Bestimmungsmodul (503) konfiguriert ist zum:
Erfassen eines Abstands zwischen einer Schnittstellenanzeigeposition des ersten Icons und einer Schnittstellenanzeigeposition des zweiten Icons; und
Feststellen, wenn eine numerische Beziehung zwischen dem Abstand, der Länge des ersten Verschiebungsvektors und der Länge des zweiten Verschiebungsvektors mit einer voreingestellten numerischen Beziehung übereinstimmt, dass das erste Verschiebungssignal und das zweite Verschiebungssignal mit der voreingestellten Bedingung übereinstimmen,
wobei die voreingestellte numerische Beziehung Folgendes umfasst:
ein Verhältnis der Länge des ersten Verschiebungsvektors zum Abstand übersteigt einen ersten voreingestellten Wert;
ein Verhältnis der Länge des zweiten Verschiebungsvektors zum Abstand übersteigt einen zweiten voreingestellten Wert; und
ein Verhältnis der Summe der Länge des ersten Verschiebungsvektors und der Länge des zweiten Verschiebungsvektors zum Abstand übersteigt einen dritten voreingestellten Wert.

6. Gerät nach Anspruch 5, wobei das erste Bestimmungsmodul (502) konfiguriert ist zum:
Bestimmen einer Anfangsposition des Ziehvorgangs in Bezug auf das erste Verschiebungssignal als Startpunkt des ersten Verschiebungsvektors, und Bestimmen einer Stopp- oder Endposition des Ziehvorgangs in Bezug auf das erste Verschiebungssignal als Endpunkt des ersten Verschiebungsvektors; und
Bestimmen einer Anfangsposition des Ziehvorgangs in Bezug auf das zweite Verschiebungssignal als Startpunkt des zweiten Verschiebungsvektors und Bestimmen einer Stoppposition des Ziehvorgangs in Bezug auf das zweite Verschiebungssignal als Endpunkt des zweiten Verschiebungsvektors.

7. Vorrichtung nach einem der Ansprüche 5 bis 6, wobei das zweite Bestimmungsmodul (503) ferner konfiguriert ist zum:
Feststellen, ob das erste Verschiebungssignal und das zweite Verschiebungssignal Verschiebungssignale sind, die sich aufeinander zu bewegen oder nicht, ja nach einer Richtung des ersten Verschiebungsvektors und einer Richtung des zweiten Verschiebungsvektors;
Ausführen, falls das erste Verschiebungssignal und das zweite Verschiebungssignal Verschiebungssignale sind, die sich aufeinander zu bewegen, des Schritts des Feststellens, ob das erste Verschiebungssignal und das zweite Verschiebungssignal mit der voreingestellten Bedingung übereinstimmen oder nicht; und
Stoppen, falls das erste Verschiebungssignal und das zweite Verschiebungssignal keine Verschiebungssignale sind, die sich aufeinander zu bewegen, des Wechsels der Icon-Position.

8. Gerät nach Anspruch 7, wobei das zweite Bestimmungsmodul (503) konfiguriert ist zum:
Bestimmen einer Verbindungslinie zwischen der Schnittstellenanzeigeposition des ersten Icons und der Schnittstellenanzeigeposition des zweiten Icons als Referenzlinie;
Erfassen eines Winkels zwischen der Richtung des ersten Verschiebungsvektors und der Referenzlinie als einen ersten Winkel, und Erfassen eines Winkels zwischen der Richtung des zweiten Verschiebungsvektors und der Referenzlinie als einen zweiten Winkel; und
Feststellen, wenn der erste Winkel innerhalb eines ersten voreingestellten Winkelbereichs liegt und der zweite Winkel innerhalb eines zweiten voreingestellten Winkelbereichs liegt, dass das erste Verschiebungssignal und das zweite Verschiebungssignal Verschiebungssignale sind, die sich aufeinander zu bewegen.

9. Computerprogramm mit Befehlen zum Ausführen der Schritte des Icon-Positionswechselverfahrens nach einem der Ansprüche 1 bis 4, wenn das Programm von einem Computer ausgeführt wird.

10. Endgerät, konfiguriert zum Durchführen des Verfahrens nach einem der Ansprüche 1 bis 4.

## Revendications

1. Procédé de permutation de position d'icônes, le procédé comprenant :
recevoir (S101, S201) un premier signal de glissement et un deuxième signal de glissement, le premier signal de glissement étant déclenché par une opération de glisser-déposer sur une première icône et le deuxième signal de glissement étant déclenché par une opération de glisser-déposer sur une deuxième icône ;
déterminer (S 102, S202) un premier vecteur de glissement conformément au premier signal de glissement, et déterminer un deuxième vecteur de glissement conformément au deuxième signal de glissement ;
déterminer (S 103, S204) si le premier signal de glissement et le deuxième signal de glissement sont compatibles ou non avec une condition préréglée conformément à une longueur du premier vecteur de glissement et à une longueur du deuxième vecteur de glissement ; et
lorsque le premier signal de glissement et le deuxième signal de glissement sont compatibles avec la condition préréglée, effectuer (S 104, S205) une permutation de position sur la première icône et la deuxième icône ;
**caractérisé en ce que** l'étape consistant à déterminer (S103, S204) si le premier signal de glissement et le deuxième signal de glissement sont compatibles ou non avec la condition préréglée conformément à la longueur du premier vecteur de glissement et à la longueur du deuxième vecteur de glissement comprend :
acquérir une distance entre une position d'affichage sur interface de la première icône et une position d'affichage sur interface de la deuxième icône ; et
lorsqu'une relation numérique entre la distance, la longueur du premier vecteur de glissement et la longueur du deuxième vecteur de glissement est compatible avec une relation numérique préréglée, déterminer que le premier signal de glissement et le deuxième signal de glissement sont compatibles avec la condition préréglée,
la relation numérique préréglée comprend :
qu'un rapport de la longueur du premier vecteur de glissement à la distance dépasse une première valeur préréglée ;
qu'un rapport de la longueur du deuxième vecteur de glissement à la distance dépasse une deuxième valeur préréglée ; et
qu'un rapport d'une somme de la longueur du premier vecteur de glissement et de la longueur du deuxième vecteur de glissement à la distance dépasse une troisième valeur préréglée.

2. Procédé selon la revendication 1, dans lequel l'étape consistant à déterminer (S102, S202) le premier vecteur de glissement conformément au premier signal de glissement et à déterminer le deuxième vecteur de glissement conformément au deuxième signal de glissement comprend :
déterminer une position initiale de l'opération de glisser-déposer associée au premier signal de glissement comme un point de départ du premier vecteur de glissement, et déterminer une position d'arrêt ou de fin de l'opération de glisser-déposer associée au premier signal de glissement comme un point de fin du premier vecteur de glissement ; et
déterminer une position initiale de l'opération de glisser-déposer associée au deuxième signal de glissement comme un point de départ du deuxième vecteur de glissement, et déterminer une position d'arrêt de l'opération de glisser-déposer associée au deuxième signal de glissement comme un point de fin du deuxième vecteur de glissement.

3. Procédé selon l'une quelconque des revendications précédentes, comprenant en outre :
avant de déterminer (S204) si le premier signal de glissement et le deuxième signal de glissement sont compatibles ou non avec la condition prédéterminée conformément à la longueur du premier vecteur de glissement et à la longueur du deuxième vecteur de glissement,
déterminer (S203) si le premier signal de glissement et le deuxième signal de glissement sont des signaux de glissement qui se déplacent l'un vers l'autre ou non conformément à une direction du premier vecteur de glissement et à une direction du deuxième vecteur de glissement ;
dans le cas dans lequel le premier signal de glissement et le deuxième signal de glissement sont des signaux de glissement qui se déplacent l'un vers l'autre, exécuter l'étape consistant à déterminer si le premier signal de glissement et le deuxième signal de glissement sont compatibles ou non avec la condition préréglée ; et
dans le cas dans lequel le premier signal de glissement et le deuxième signal de glissement ne sont pas des signaux de glissement qui se déplacent l'un vers l'autre, arrêter la permutation de position d'icônes.

4. Procédé selon la revendication 3, dans lequel l'étape consistant à déterminer (S203) si le premier signal de glissement et le deuxième signal de glissement sont des signaux de glissement qui se déplacent l'un vers l'autre ou non conformément à la direction du premier vecteur de glissement et à la direction du deuxième vecteur de glissement comprend :
déterminer une ligne de connexion entre la position d'affichage sur interface de la première icône et la position d'affichage sur interface de la deuxième icône comme une ligne de référence ;
acquérir un angle entre la direction du premier vecteur de glissement et la ligne de référence comme un premier angle, et acquérir un angle entre la direction du deuxième vecteur de glissement et la ligne de référence comme un deuxième angle ; et
lorsque le premier angle est dans une première plage d'angle préréglée et que le deuxième angle est dans une deuxième plage d'angle préréglée, déterminer que le premier signal de glissement et que le deuxième signal de glissement sont des signaux de glissement qui se déplacent l'un vers l'autre.

5. Dispositif de permutation de position d'icônes, le dispositif comprenant :
un module de réception (501), configuré pour recevoir un premier signal de glissement et un deuxième signal de glissement, le premier signal de glissement étant déclenché par une opération de glisser-déposer sur une première icône et le deuxième signal de glissement étant déclenché par une opération de glisser-dépose sur une deuxième icône ;
un premier module de détermination (502), configuré pour déterminer un premier vecteur de glissement conformément au premier signal de glissement, et déterminer un deuxième vecteur de glissement conformément au deuxième signal de glissement ;
un deuxième module de détermination (503), configuré pour déterminer si le premier signal de glissement et le deuxième signal de glissement sont compatibles ou non avec une condition préréglée conformément à une longueur du premier vecteur de glissement et à une longueur du deuxième vecteur de glissement ; et
un module de permutation (504) configuré pour, lorsque le premier signal de glissement et le deuxième signal de glissement sont compatibles avec la condition préréglée, effectuer une permutation de position sur la première icône et la deuxième icône ;
**caractérisé en ce que** le deuxième module de détermination (503) est configuré pour :
acquérir une distance entre une position d'affichage sur interface de la première icône et une position d'affichage sur interface de la deuxième icône ; et
lorsqu'une relation numérique entre la distance, la longueur du premier vecteur de glissement et la longueur du deuxième vecteur de glissement est compatible avec une relation numérique préréglée, déterminer que le premier signal de glissement et le deuxième signal de glissement sont compatibles avec la condition préréglée,
la relation numérique préréglée comprend :
qu'un rapport de la longueur du premier vecteur de glissement à la distance dépasse une première valeur préréglée ;
qu'un rapport de la longueur du deuxième vecteur de glissement à la distance dépasse une deuxième valeur préréglée ; et
qu'un rapport d'une somme de la longueur du premier vecteur de glissement et de la longueur du deuxième vecteur de glissement à la distance dépasse une troisième valeur préréglée.

6. Dispositif selon la revendication 5, dans lequel le premier module de détermination (502) est configuré pour :
déterminer une position initiale de l'opération de glisser-déposer associée au premier signal de glissement comme un point de départ du premier vecteur de glissement, et déterminer une position d'arrêt ou de fin de l'opération de glisser-déposer associée au premier signal de glissement comme un point de fin du premier vecteur de glissement ; et
déterminer une position initiale de l'opération de glisser-déposer associée au deuxième signal de glissement comme un point de départ du deuxième vecteur de glissement, et déterminer une position d'arrêt de l'opération de glisser-déposer associée au deuxième signal de glissement comme un point de fin du deuxième vecteur de glissement.

7. Dispositif selon l'une quelconque des revendications 5 à 6, dans lequel le deuxième module de détermination (503) est configuré en outre pour :
déterminer si le premier signal de glissement et le deuxième signal de glissement sont des signaux de glissement qui se déplacent l'un vers l'autre ou non conformément à une direction du premier vecteur de glissement et à une direction du deuxième vecteur de glissement ;
dans le cas dans lequel le premier signal de glissement et le deuxième signal de glissement sont des signaux de glissement qui se déplacent l'un vers l'autre, exécuter l'étape consistant à déterminer si le premier signal de glissement et le deuxième signal de glissement sont compatibles ou non avec la condition préréglée ; et
dans le cas dans lequel le premier signal de glissement et le deuxième signal de glissement ne sont pas des signaux de glissement qui se déplacent l'un vers l'autre, arrêter la permutation de position d'icônes.

8. Dispositif selon la revendication 7, dans lequel le deuxième module de détermination (503) est configuré pour :
déterminer une ligne de connexion entre la position d'affichage sur interface de la première icône et la position d'affichage sur interface de la deuxième icône comme une ligne de référence ;
acquérir un angle entre la direction du premier vecteur de glissement et la ligne de référence comme un premier angle, et acquérir un angle entre la direction du deuxième vecteur de glissement et la ligne de référence comme un deuxième angle ; et
lorsque le premier angle est dans une première plage d'angle préréglée et que le deuxième angle est dans une deuxième plage d'angle préréglée, déterminer que le premier signal de glissement et que le deuxième signal de glissement sont des signaux de glissement qui se déplacent l'un vers l'autre.

9. Programme informatique comprenant des instructions pour exécuter les étapes du procédé de permutation de position d'icônes selon l'une quelconque des revendications 1 à 4, lorsque ledit programme est exécuté par un ordinateur.

10. Terminal configuré pour mettre en oeuvre le procédé selon l'une quelconque des revendications 1 à 4.
